# EUROPEAN PATENT SPECIFICATION

(11) **EP 2 284 753 B1**
(45) Date of publication and mention of the grant of the patent: **24.01.2018**
(21) Application number: 10172262.7
(22) Date of filing: 09.08.2010
(51) Int. Cl.: G06F 21/00

(54) **Program introduction supporting server, program introduction supporting system, program introduction supporting method, and program introduction supporting computer program**
Server zur Unterstützung der Programmeinleitung, System zur Unterstützung der Programmeinleitung, Verfahren zur Unterstützung der Programmeinleitung und Computerprogramm zur Unterstützung der Programmeinleitung
Serveur prenant en charge l'introduction de programme, système prenant en charge l'introduction de programme, procédé prenant en charge l'introduction de programme et programme information prenant en charge l'introduction de programme

(30) Priority: 13.08.2009 JP 2009187799
(43) Date of publication of application: 16.02.2011
(73) Proprietor: Ricoh Company, Ltd., Tokyo 143-8555 (JP)
(72) Inventor: Sugiura, Yuuko, Tokyo 143-8555 (JP)
(74) Representative: Schwabe - Sandmair - Marx

(56) References cited:
- WO-A1-2008/055562
- US-A- 5 917 912
- US-A1- 2005 268 343
- US-B1- 6 189 146

## Description

### BACKGROUND OF THE INVENTION

### 1. Field of the Invention

The present invention generally relates to a program introduction supporting server, a program introduction supporting system, a program introduction supporting method, and a program introduction supporting computer program, particularly to a program introduction supporting server, a program introduction supporting system, a program introduction supporting method, and a program introduction supporting computer program for electronic apparatuses.

### 2. Description of the Related Art

As an example, image forming apparatuses such as multifunction peripherals accept installing of new programs developed after shipment of the image forming apparatuses. It is convenient for the user to be provided with a license for installing the program or a license for using the program apart from the program itself. These licenses are also beneficial for sellers of the programs because these licenses may expand business opportunities.

For example, Patent Document 1 discloses a technique of effectively setting licenses of application programs in plural apparatuses.

When the programs and licenses are separately provided, there is a problem that the introduction procedures of the programs are complicated. For example, a user may not use the program even after the user acquires the program and installs the program in the image forming apparatus. In order to use the program, it is necessary to acquire the license for the program.

One of the programs may have a dependency on another one of the programs. In this case, the one of the program and the depending other one of the programs are not always distributed as a package. Therefore, there may occur an event in which the installed program is not normally operable because the one of the programs does not exist in the delivered package even after the license to the other one of the programs is acquired. Further, the dependency may constitute a hierarchy. Accordingly, the user is required to solve the dependency of the hierarchy in order to solve the dependency of the programs.

Patent Document 1: Japanese Laid-Open Patent Application No. 2008-243179.

US 5,917,912 A pertains to a system according to the preamble of claim 1.

US 6 189 146 B1 pertains to systems and methods for enforcing software licenses.

The present invention is defined by the subject matter of the appended claims.

Accordingly, embodiments of the present invention provide a novel and useful program introduction supporting server, program introduction supporting system, program introduction supporting method, and program introduction supporting computer program which can appropriately introduce programs in electronic apparatuses and licenses of the programs in the electronic apparatuses solving one or more of the problems discussed above.

One aspect of the embodiments of the present invention may be to provide a program introduction supporting server connected, via a network, to a license managing server configured to store, by correlating a license identifier of a program license for a program for an electronic apparatus, a program product identifier of the program and a license status indicative of a state of using the program license corresponding to the license identifier, and a program managing server configured to store the program product identifier of the program and the program by correlating the program product identifier of the program and the program, the program introduction supporting server including a product information acquiring unit configured to acquire the program product identifier associated with the license identifier in response to an input of the license identifier, a program acquiring unit configured to acquire the program corresponding to the program product identifier acquired by the product information acquiring unit from the program managing server, a license acquiring unit configured to acquire a license file corresponding to the license identifier by designating the license identifier from the license managing server and updating the license state of the license identifier to a value indicating that the license is used, and an installation controlling unit configured to send the acquired program and the acquired license file to the electronic apparatus connected to the program introduction supporting server via the network.

Additional objects and advantages of the embodiments will be set forth in part in the description which follows, and in part will be obvious from the description, or may be learned by practice of the invention. Objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE DRAWINGS

FIG.1 illustrates a system configuration of an apparatus managing system of an embodiment.
FIG. 2 illustrates a structural example of a sales package.
FIG. 3 illustrates a structural example of sales package information.
FIG. 4 illustrates a structural example of functional package information.
FIG.5 illustrates function configuration information of an apparatus managing system of the embodiment.
FIG.6 illustrates a hardware configuration of the apparatus managing server of the embodiment.
FIG. 7 is a sequence diagram illustrating a procedure of installation and activation of a sales package.
FIG. 8 illustrates a structural example of a product key.
FIG. 9 is a structural example of a license managing table.
FIG. 10 illustrates a structural example of an installation information managing table.
FIG. 11 illustrates a structural example of a dependency relationship managing table.
FIG. 12 is a structural example of a package managing table.
FIG. 13 illustrates a structural example of a license file.
FIG. 14 is a flowchart illustrating a procedure of generating a license file with a license managing unit.
FIG. 15 is a sequence diagram illustrating a procedure of uninstallation and activation of the sales package.

### DETAILED DESCRIPTION OF THE PREFERRED EMBODIMENTS

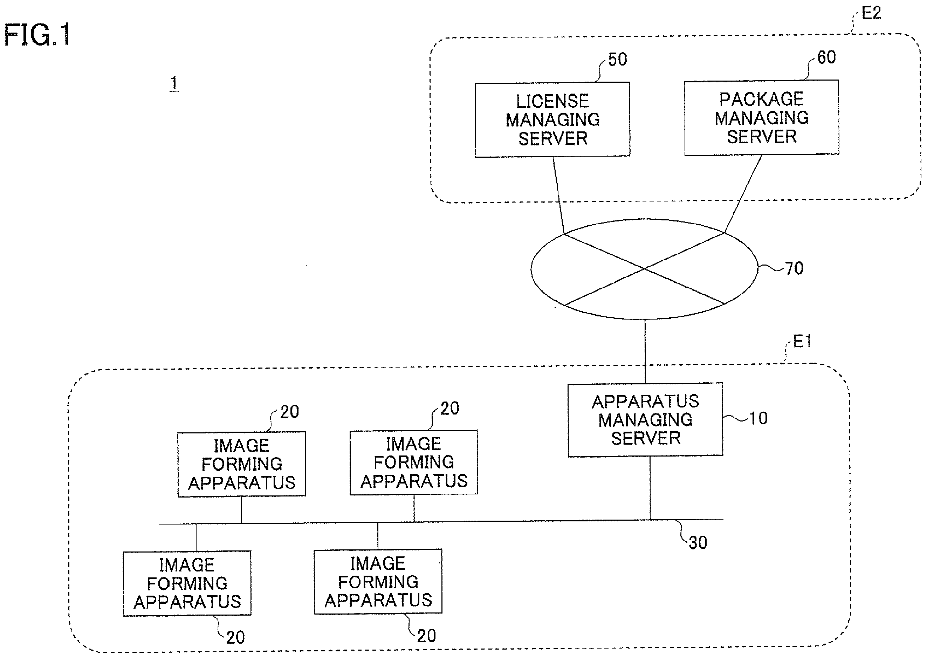

A description is given below, with reference to the FIG. 1 through FIG. 15 of embodiments of the present invention.

Reference symbols typically designate as follows:
1: apparatus managing system;
10: apparatus managing server;
20: image forming apparatus;
21: request processing unit;
22: license checking unit;
23: installation information managing table;
50: license managing server;
51: license managing unit;
52: license managing table;
60: package managing server;
61: appropriateness verifying unit;
62: package managing unit;
63: dependency relationship managing table;
64: package managing table;
65: package storing unit;
100: drive device;
101: storage device;
102: auxiliary storage device;
103: memory device;
104: CPU;
105: interface device;
106: display device;
107: input device;
111: UI controlling unit;
112: package information acquiring unit;
113: apparatus information acquiring unit;
114: installation destination reception unit;
115: appropriateness confirming unit;
116: package acquiring unit;
117: license acquiring unit;
118: installation controlling unit;
119: uninstallation destination determining unit;
120: deactivating unit;
121: uninstallation controlling unit; and B: bus.

FIG.1 illustrates a system configuration of an apparatus managing system of an embodiment according to the present invention. Referring to FIG. 1, the apparatus managing system 1 includes a user environment E1 which is a system environment for users of image forming apparatuses 20. For example, the user environment E1 corresponds to an enterprise or an office to which the users belong. In the user environment E1, image forming apparatuses 20, an apparatus managing server 10 and the like are connected via a wired or wireless network 30 such as a local area network (LAN). The image forming apparatus 20 may be a multifunction peripheral which may demonstrate plural functions such as printing, scanning, copying and faxing without using other apparatuses. It is possible to continually expand functions of the image forming apparatus by adding or updating a program component (hereinafter referred to as "component").

The apparatus managing server 10 is a computer such as personal computer (PC) which acquires a component operable in the image forming apparatuses 20 in the user environment E1 and the license of the component, and introduces the component and the license. The apparatus managing server 10 is an example of the program introduction supporting server. Other user environments E1 may exist depending on the number of users in the enterprise or the office. Therefore, the number of the user environments E1 may be plural.

On the other hand, a maker environment E2 is a system environment of a sales side of the components to be added to the image forming apparatuses 20. The maker environment E2 may be operated by the maker of the image forming apparatuses 20. The maker environment E2 includes a license managing server 50 and a package managing server 60.

The license managing server 50 is a computer managing the licenses of the components purchased by the users. The package managing server 60 is a computer managing the entities of the components.

The user environment E1 and the user environment E2 are connected via a network 70 such as the Internet.

The component of the embodiment is distributed by a unit called "sales package". Further, a group of plural sales packages may become the distribution unit. Hereinafter, the group of the plural sales packages is referred to as "group".

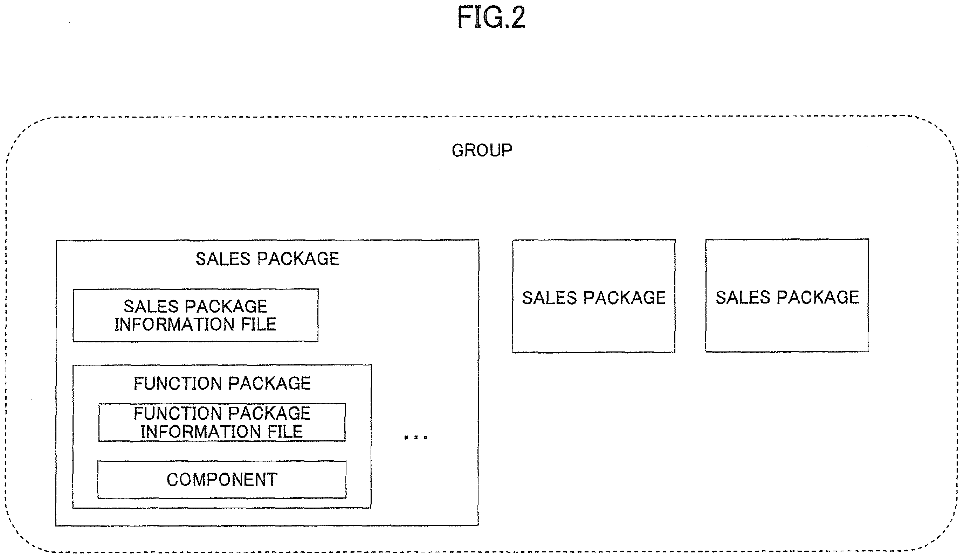

FIG. 2 illustrates a structural example of a sales package. As illustrated, the sales package includes one sales package information file and an archival file including one or more function packages.

The sales package information file designates a file in which attribute information of the sales package (sales package information) is recorded.

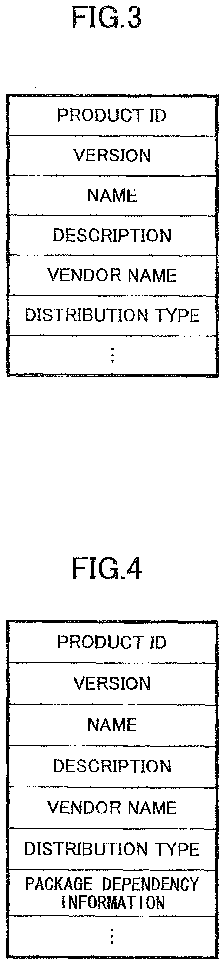

FIG. 3 illustrates a structural example of sales package information. Referring to FIG. 3, the sales package information includes the product ID, the version, the name, the description, the vendor name, and the distribution type.

The product ID designates program product identifiers uniquely allocated to the sales packages or the function packages. The version designates version numbers of the sales packages. The description designates explanation of the sales package. The vendor name designates the names of the developers of the sales packages. The name designates the names of the sales packages.

Referring back to FIG. 2, the function package is a software package having a specific function. One of the function packages is fabricated as an archival file including a component and a corresponding function package information file. The archival file may be a Java Archive file (JAR file). "Java" is a registered trademark.

Attribute information of the function package, i.e. the function package information, is registered in the function package information file.

FIG. 4 illustrates a structural example of the functional package information. Referring to FIG. 4, the function package information includes the product ID, the version, the name, the description, the vendor name, the distribution type, the package dependency information, and the like.

Referring to FIG. 4, the product ID is allocated to the function package as described above. The version designates version numbers of the function packages. The description designates explanations of the function packages. The vendor name designates the names of the developers of the function packages.

Referring to FIG. 2, one group is constituted by three sales packages as an example. The sales packages included in the group may be individually distributed.

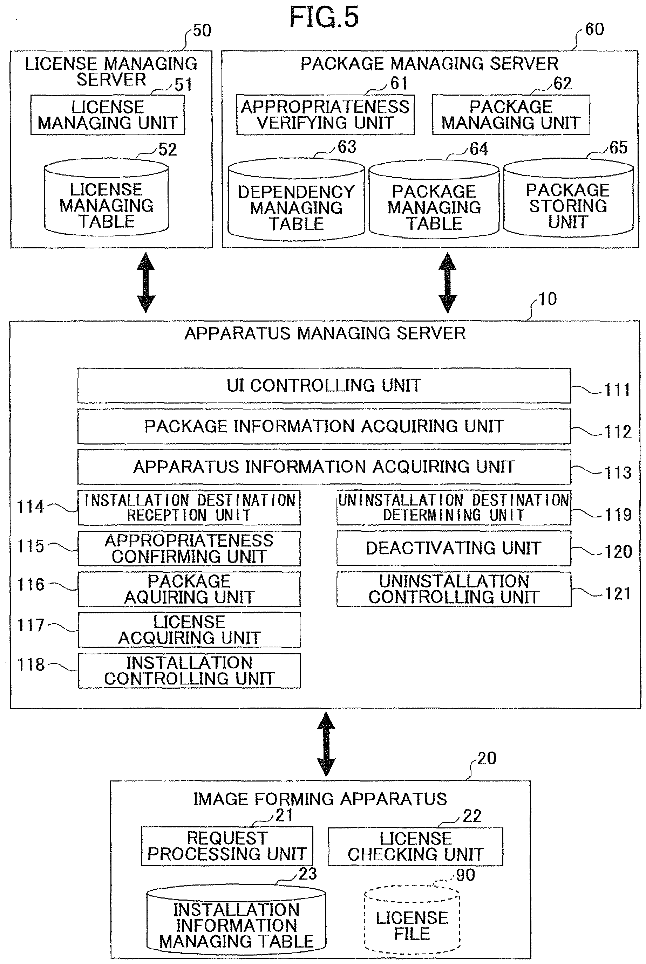

FIG.5 illustrates example function configuration information of the apparatus managing system of the embodiment.

Referring to FIG. 5, the image forming apparatus 20 includes a request processing unit 21, a license checking unit 22, an installation information managing table 23, or the like. The request processing unit 21 sends apparatus information, installs the sales packages, introduces the license files 90, uninstalls the sales packages, and deletes the license files 90.

The license file 90 records data certifying licenses of the sales packages, which are data for permitting use of the sales packages. It is not possible to use the sales component of the embodiment in the image forming apparatus 20 only by acquiring the component itself. The sales package can be used by introducing the corresponding license file 90 into the image forming apparatus 20.

The license checking unit 22 determines whether the sales package can be used based on the license file 90 before the sales package is used. The installation information managing table 23 manages information such as a sales package installed in the image forming apparatus 20, and is stored in a storage device (not illustrated) of the image forming apparatus 20.

The license managing server 50 includes a license managing unit 51, a license managing table 52 and the like. The license managing unit 51 manages the licenses using the license managing table 52 by issuing the licenses, removing the licenses or handling the licenses. The license managing table 52 records the state of the licenses of the sales packages. The license managing table 52 is stored in a storage device (not illustrated) of the license managing server 50.

The package managing server 60 includes an appropriateness verifying unit 61, a package managing unit 62, a dependency relationship managing table 63, a package managing table 64, and a package storing unit 65.

The appropriateness verifying unit 61 determines whether the dependency relationship of the function package included in the sales package to be installed can be satisfied by a function package which has already been installed in the image forming apparatus 20 in reference to the dependency relationship managing table 63. Specifically, the appropriateness verifying unit 61 determines whether a function package depended on by the function package included in the sales package to be installed is already installed in the image forming apparatus 20.

The package managing unit 62 manages the sales package recorded in the package storing unit 65. For example, the package managing unit 62 acquires the sales package from the package storing unit 65 upon receipt of a download request for the sales package. The acquired sales package is sent back to a source of the download request. request.

The dependency relationship managing table 63 has information indicative of the dependency relationship between the function packages and is stored in the storage device of the package managing server 60. The package managing table 64 manages a relationship between the sales package and the function package. The package managing table 34 is stored in a storage device (not illustrated) of the package managing server 60. The package storing unit 65 stores the sales packages and the components such as firmware in association with the product IDs of the sales packages and the product IDs of the components.

The apparatus managing server 10 includes an UI controlling unit 111, a package information acquiring unit 112, an apparatus information acquiring unit 113, an installation destination reception unit 114, an appropriateness confirming unit 115, a package acquiring unit 116, a license acquiring unit 117, an installation controlling unit 118, an uninstallation destination determining unit 119, a deactivating unit 120, an uninstallation controlling unit 121, and the like. These portions are realized by processes carried out by a program installed in a CPU (not illustrated) of the apparatus managing server 10.

The UI controlling unit 111 receives an instruction from a user. The instruction may be a request for installing or uninstalling the sales package. The package information acquiring unit 112 acquires information related to the sales package to be installed or uninstalled from the license managing server 50. The apparatus information acquiring unit 113 acquires apparatus information from the image forming apparatus 20. The apparatus information includes information related to the sales package and firmware installed in the image forming apparatus 20. The installation destination reception unit 114 receives designation of the image forming apparatus 20 in which the sales package is to be installed from the user. The appropriateness confirming unit 115 causes the appropriateness verifying unit 61 of the package managing server 60 to verify appropriateness for installing the sales package to be installed in the image forming apparatus 20.

The package acquiring unit 116 acquires by downloading the sales package to be installed from the package managing server 60. The license acquiring unit 117 acquires the license file 90 corresponding to the sales package to be installed from the license managing server 50. The installation controlling unit 118 sends the sales package and the license file 90 to the image forming apparatus 20.

The uninstallation destination determining unit 119 determines whether the sales packages to be uninstalled are installed in the image forming apparatuses 20 to identify the image forming apparatus 20. The deactivating unit 120 sends a deletion request of the license file 90 to the image forming apparatus 20, and sends a request to remove the license corresponding to the license file 90 to the license managing server 50. The uninstallation controlling unit 121 requests the image forming apparatus 20 to uninstall the sales package.

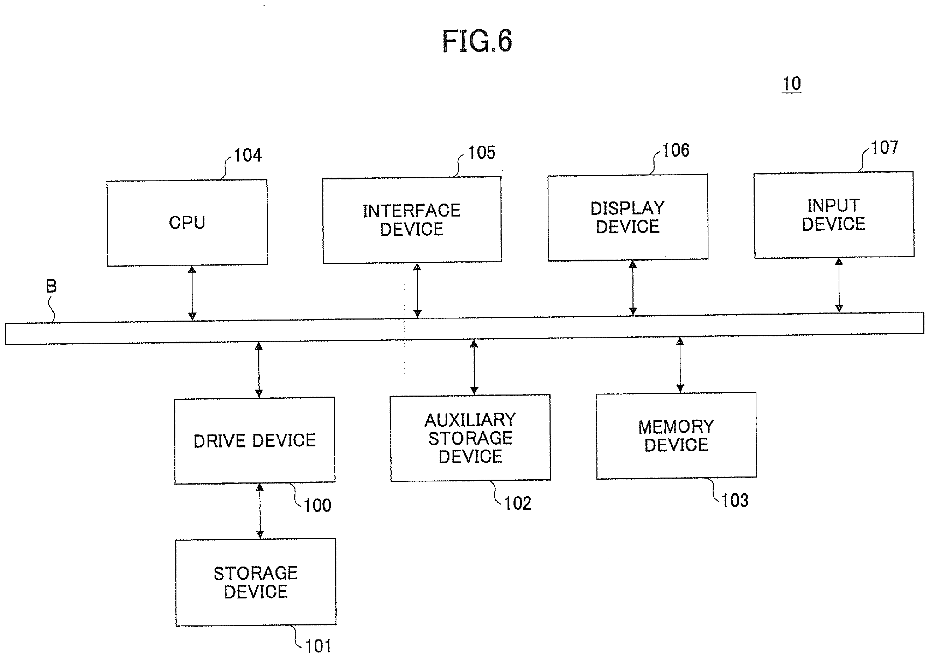

FIG. 6 illustrates a hardware configuration of the apparatus managing server 10 of the embodiment. Referring to FIG. 6, the apparatus managing server 10 includes a drive device 100, an auxiliary storage device 102, a memory device 103, a CPU 104, an interface device 105, a display unit 106, and an input unit 107, which are mutually connected by a bus B.

A program realizing the processes in the apparatus managing server 10 is supplied from a storage device 101 such as a CD-ROM. When the storage device in which the program is recorded is installed in the drive device 100, the program is installed in the auxiliary storage device 102 via the drive device 100. However, the program need not be always installed from the storage device 101 and may be downloaded from another computer via the network. The auxiliary storage device 102 stores necessary files, data and so on in addition to the installed program.

The memory device 103 reads out the program from the auxiliary storage device 102 and stores the program in the memory device 103 when program invocation is instructed. The CPU 104 realizes a function related to the apparatus managing server 10 in conformity with the program stored in the memory device 103. The interface device 105 is used as an interface for connecting to the network. The display device 106 displays a Graphical User Interface (GUI) or the like generated by the program. The input device 107 is configured to include a keyboard, a mouse or the like, and used to input various operational instructions.

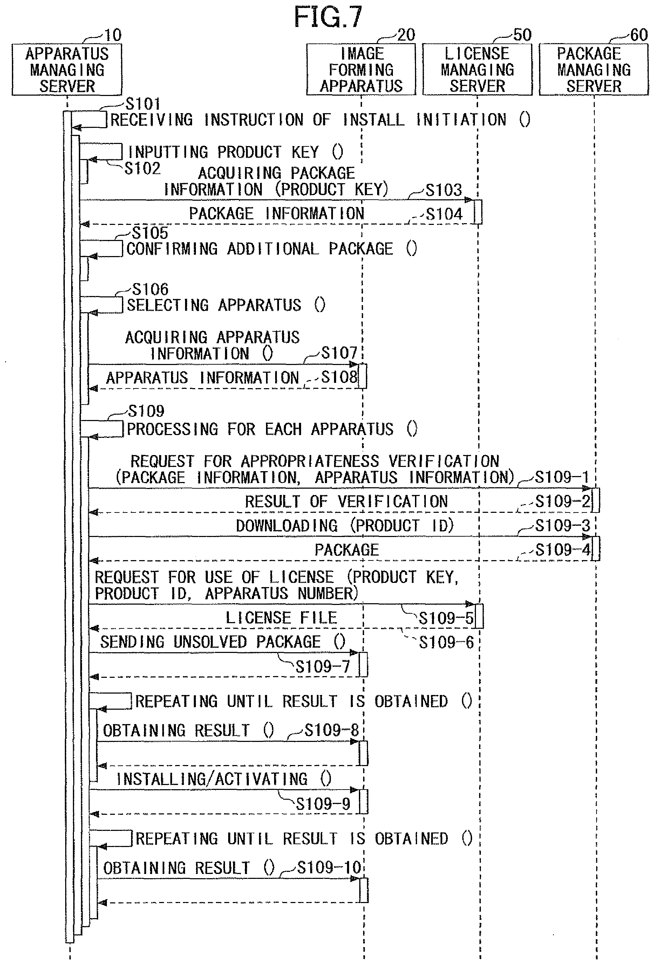

Hereinafter, the procedure in the apparatus managing system 1 is described. FIG. 7 is a sequence diagram illustrating a procedure of installation and activation of the sales package. Referring to FIG. 7, a user of the image forming apparatus 20 purchases any commercial products of the sales packages, and the product key is already obtained.

In the embodiment, the commercial products are constituted by the sales packages, the groups, and the contents of the licenses featured by license modes, license validated dates and license volumes. When commercial products include different contents of the licenses, even though the same sales packages are included in these commercial products, these commercial products are different. The license mode may be classified as an outright sale type, a time-limited license type and a trial license type. The license of the outright sale type enables the use of the commercial product without a limit of time after purchasing the commercial product. The license of the time-limited license type enables use within a predetermined period. The license of the trial license type enables trial use. The license validated date is an attribute used when the license mode is the time limited license or the trial license. The license validated date designates a duration of time while the license is valid. The volume number is the number of volume of the licenses. When the commercial products of which volume number is two or more are purchased, the volume license is given to thereby permit simultaneous use of the same sales packages by as many users as the volume number.

Therefore, purchase of the commercial product includes selection of the contents of the licenses. The product keys are identifiers uniquely issued or allocated every time when the commercial products are purchased by the users.

The product keys are used to identify the license (right of use) of the sales package included in the commercial products as the license identifier, and to prove the authentic purchaser of the commercial products. In the embodiment, the product ID and the product key are clearly distinguished. Said differently, the product IDs are used to distinguish whether the sales packages are the same or different, and the product keys are used to distinguish whether there is purchasing of the commercial products. Therefore, every time the commercial products are purchased, different product keys are issued.

The mode of purchasing the commercial products is not specifically limited. The commercial products may be purchased in a shop or through a virtual company such as a Web site. In the former, the product key is ordinarily attached to a CD-ROM or the like in which the sales package is stored. In the latter, the product key may be displayed on a Web page after the purchase is confirmed in the Web site where the commercial products is purchased. Referring to FIG. 7, there are explained processes of installing the component in the image forming apparatus 20, acquiring a license, and activating the sales package of the commercial product purchased by the user using the apparatus managing server 10.

When the UI controlling unit 111 of the apparatus managing server 10 receives an input of an instruction to install the sales package via an initial screen displayed on the display device 106, the UI controlling unit 111 causes an input screen for the product key to display on the display device 106 in step S101. Hereinafter, the sales package to be installed is referred to as "current sales package". When the product key of the current sales package is input by a user via a product key input screen in step S102, the package information acquiring unit 112 designates the input product key and sends an acquisition request related to the product key to the license managing server 50 in step S103.

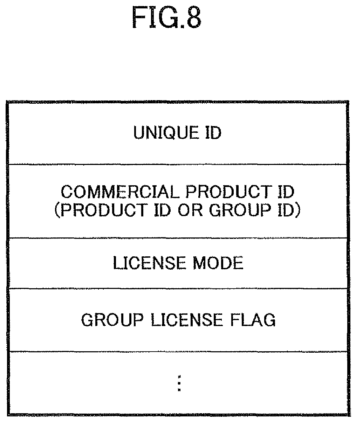

FIG. 8 illustrates a structural example of a product key. Referring to FIG. 8, the product key is data including a unique ID, a commercial product ID, a license mode, a group license flag, and the like.

The unique ID is a unique identifier generated along with generation of the product key. Uniqueness of the product key is confirmed by the unique ID. The commercial product ID is the product ID of the sales package or the group ID of the group of the purchased commercial product. The license mode is the license mode of the purchased commercial product. The group license flag is a parameter indicative of whether the commercial product ID in the product key is the group ID. If the commercial product ID in the product key is the group ID, the group license flag indicates true. If not, the group license flag indicates false.

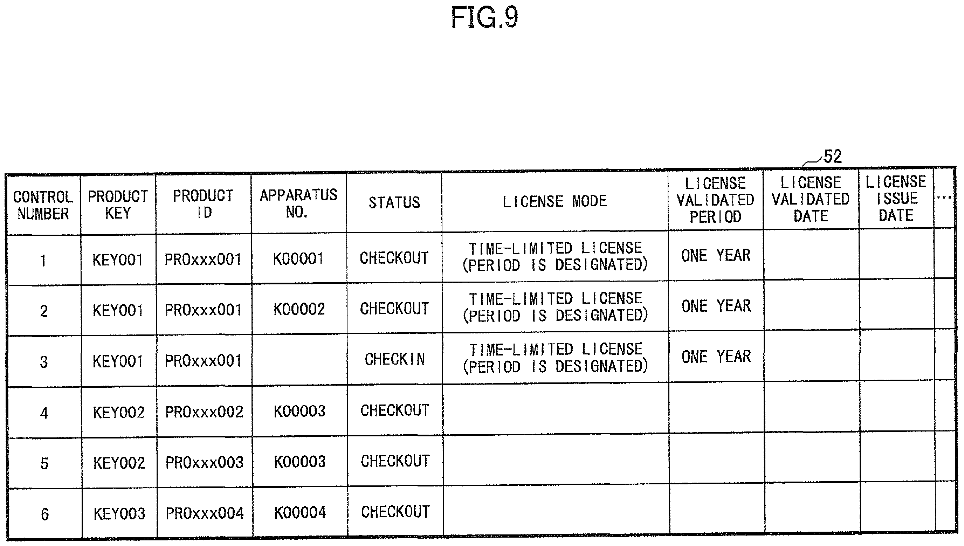

The license managing unit 51 of the license managing server 50 determines validity of the product key designated by the acquisition request with reference to the license managing table 52 in response to receipt of the acquisition request of the package information. FIG. 9 illustrates a structural example of the license managing table 52. Referring to FIG. 9, the license managing table 52 has control numbers, product keys, product IDs, apparatus numbers, statuses, license modes, license validated periods, license validated dates, license issue dates, and the like.

Among these items, the control numbers, the product keys, the product IDs, the statuses, the license modes, and the license validated periods are recorded in the license managing table 52 when the commercial products are purchased.

On the other hand, the apparatus numbers, the license validated dates, and the license issue dates are recorded in response to the issuance of the licenses, i.e. issuance of the license files 90. The values of the statuses are updated in response to the issuance of the licenses.

The control number is an identifier (e.g. number) uniquely allocated to the records along with generation of the records of the license managing table 52.

The apparatus number of the image forming apparatus 20 is registered in the license managing table 52 as an apparatus using the sales package when the license file 90 is issued. The apparatus numbers are identification information (i.e. apparatus identifier) for uniquely identifying the image forming apparatuses 20. The status is information indicative of the states of the licenses. In the embodiment, the statuses indicate "no license", "checkout", or "checkin". The status of "no license" indicates that no license is issued. The status of "checkin" indicates that the license is released and usable. The validated date indicates the validated date of the license file 90 calculated based on the license validated period when the license file 90 is issued. The license issue date is the issue date of the license file 90 which is registered when the license file 90 is issued.

Referring to FIG. 9, product keys and product IDs of the records identified by the control numbers 1 to 3 are used in common, for example. This means that volume number of licenses of the commercial product identified by the product key of "KEY001" is three licenses. Further, the product keys of the records of the control numbers 4 and 5 are in common, and the product IDs of the records of the control numbers 4 and 5 are different. This means that the commercial products identified by the product key "KEY 002" correspond to a group license including two types of sales packages. The group license is a license given to sales packages belonging to a group.

For example, the license managing unit 51 determines that the product key is valid if the record including the received product key is registered in the license managing table 52, the status of the record including the product key is not "checkout", and the license validated date of the record including the product key has not passed yet or the value of the license validated date is not registered using the above-mentioned license managing table 52. If not, the license managing unit 51 determines that the product key is invalid.

When the product key is determined to be invalid, the license managing unit 51 returns error information indicating the product key is invalid to the package information acquiring unit 112. In this case, the package information acquiring unit 112 causes the error information to appear on the display device 106 and stops the installation.

When the product key is determined to be valid, the license managing unit 51 returns package information recorded in the record corresponding to the received product key to the package information acquiring unit 112 in step S104. Therefore, the package information includes at least the product ID of the current sales package corresponding to the received product key. Further, when the received product key relates to the group license of the volume license, information related to plural product IDs is included in the package information (plural records).

When the package information is received by the package information acquiring unit 112, the UI controlling unit 111 causes the display device 106 to appear on a confirmation screen including the received package information in the display device 106 to thereby make the user confirm the content of the current sales package and the content of the license in step S105.

For example, when it is instructed by the user to continue installing the current sales package by selecting an OK button on the confirmation screen, the installation destination reception unit 114 causes the apparatus selection screen including a list of the image forming apparatuses 20 to appear on the display device 106, to enable the user selecting the image forming apparatus 20 in which the current sales package is installed in step S106. It is possible to select plural image forming apparatuses on the apparatus selection screen. The image forming apparatuses 20 of which IP addresses and host names are stored in the auxiliary storage device 102 can be displayed on the apparatus selection screen. When the apparatus information acquiring unit 113 sends a broadcast or the like through the network 30, the image forming apparatuses 20 connected via the network 30 are dynamically searched, and the host names and the like of the searched image forming apparatuses 20 may be displayed on the apparatus selection screen.

Thereafter, the apparatus information acquiring unit 113 sends acquisition requests for the apparatus information to the selected image forming apparatuses 20 in step S107. The request processing units 21 of the image forming apparatuses 20 receiving the acquisition request for the apparatus information acquire information recorded in the installation information managing table 23, and returns information including the acquired information and the apparatus numbers of the corresponding image forming apparatuses 20 to the apparatus information acquiring unit 113 as the apparatus information in step S108.

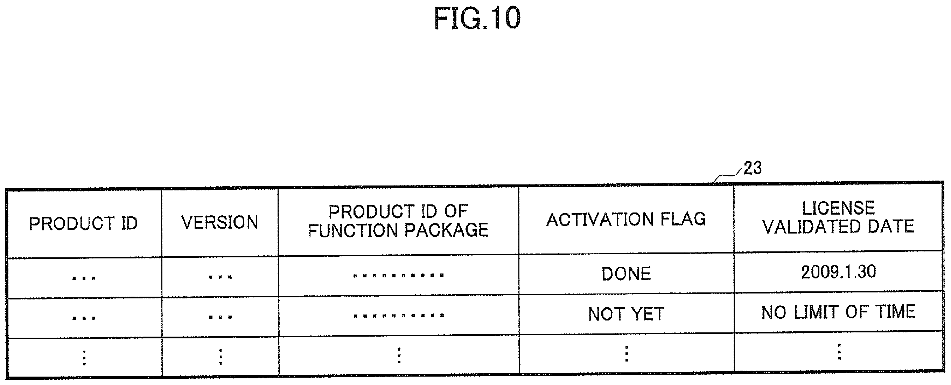

FIG. 10 illustrates a structural example of the installation information managing table 23. Referring to FIG. 10, the installation information managing table 23 stores product IDs, versions, product IDs of the function packages, activation flags, validated dates and the like for each sales package and firmware installed in the image forming apparatuses 20.

The product IDs of the function packages included in the sales package are listed. The activation flags indicate whether the sales packages are already activated. The license validated dates indicate validated dates of the license file 90 issued for the sales packages. The activation flags and the license validated dates of the function packages inherit activation flags and license validated dates for the sales packages to which the function packages belong. Further, the contents of the installation information managing table 23 are registered in the image forming apparatuses 20 when the sales packages described below are installed. The apparatus information returned from the image forming apparatuses 20 in step S108 includes all information registered in the installation information managing table 23. The firmware is a program component existing in a hierarchy lower than the function package. The firmware provides primitive functions to the function package. It is unnecessary to acquire a license in order to use the firmware because the firmware is previously installed in the image forming apparatus 20. Therefore, the product IDs of the function packages, the activation flags and the license validated dates of the records of the firmware are not used in the embodiment even though these are listed in the install information managing table 23. Referring to FIG. 10, information of the firmware and the information of the sales packages are managed on the same table. However, it is possible to separate the table into different tables.

Step S109 is a loop process carried out for each of the image forming apparatuses 20 of which apparatus information is acquired after selecting on the apparatus selection screen. Hereinafter, the image forming apparatuses 20 to be processed in the loop process are referred to as "current apparatus".

In step S109-1, the appropriateness confirming unit 115 sends a request for appropriateness verification including apparatus information of the current apparatus 20 and package information acquired by the package information acquiring unit 112. The "appropriateness" means whether it is appropriate to install the function package included in the current sales package in the current apparatus 20. The appropriateness verifying unit 61 of the package managing server 60 verifies the appropriateness by referring to the dependency relationship managing table 63 upon receipt of the request for appropriateness verification.

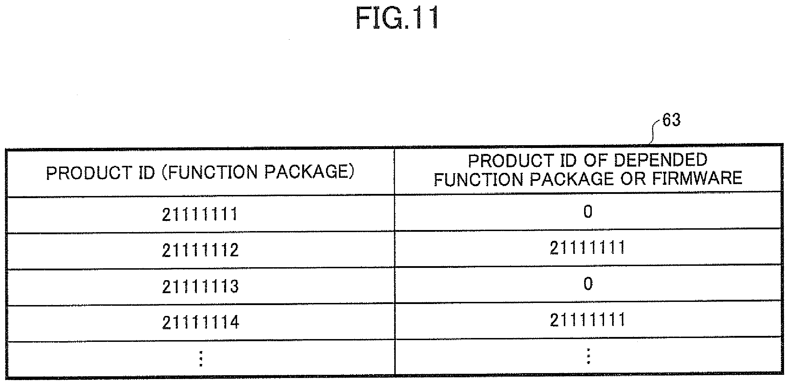

FIG. 11 illustrates a structural example of the dependency relationship managing table 63. Referring to FIG. 11, the dependency relationship managing table 63 registers the product IDs of the function packages, the product IDs of depended on function packages on which the function packages depend, and the product IDs of firmware with respect to the function packages. The number of the product IDs of the depended on function packages and the firmware may be plural. Where the product ID is "0", no depended on function package exists.

The appropriateness verifying units 61 acquire a list of the product IDs of the function packages belonging to the current packages from the package managing table 64 when the appropriateness is verified.

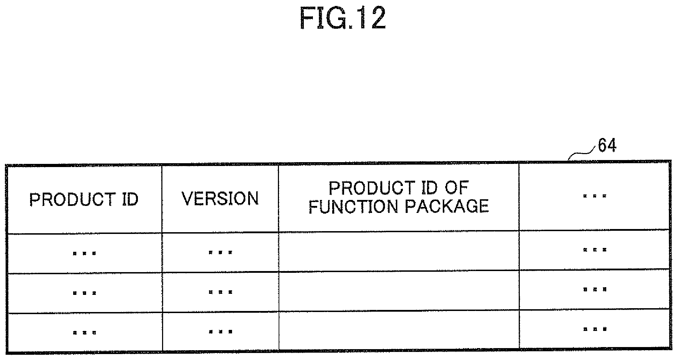

FIG. 12 illustrates a structural example of the package managing table 64. Referring to FIG. 12, the package managing table 64 registers the product IDs, the versions, and the product IDs of the function packages for each of the sales packages. The product IDs of the function packages included in the sales package are listed in FIG. 12.

Thereafter, the appropriateness verifying unit 61 specifies the function package and the firmware (hereinafter, referred to as "depended on package") based on the product ID of the acquired function package and the dependency relationship managing table 63. When there exists the depended on package, it is determined whether the product ID of the depended on package is included in the apparatus information. When the product IDs of all the depended on packages are included in the apparatus information, the appropriateness verifying unit 61 determines that the appropriateness is satisfied. Hereinafter, the depended on package which is not included in the apparatus information is referred to as "unsolved package". When there exists at least one unsolved package, the appropriateness verifying unit 61 determines that there is no appropriateness. The number of depended on packages per one function package may be plural. The dependency relationship may be recursively carried out.

Thereafter, the appropriateness verifying unit 61 returns the result of the appropriateness verification to the appropriateness confirming unit 115 in step S109-2. When it is determined that the appropriateness is not satisfied, the result of the appropriateness verification may include the product ID of the unsolved package.

Thereafter, the package acquiring unit 116 designates the product ID of the current sales package and sends a download request to the package managing server 60 in step S109-3. The package managing unit 62 of the package managing server 60 acquires the sales package corresponding to the designated product ID from the package storing unit 65, and sends the acquired sales package to the package acquiring unit 116 in step S109-4. When the number of the current sales packages is plural, the plural download processes are repeated in steps S109-1 and S109-4. When the result of the appropriateness verification is received in step S109-2, the unsolved package is downloaded. The number of the current packages may become plural when the product key input in step S101 corresponds to the group license or the plural product keys are input.

Next, the license acquiring unit 117 sends a request for use of a license to the license managing server 50 by designating the product key input in step S101, the product ID of the current sales package, and the apparatus number of the current apparatus 20 in step S109-5.

The license managing unit 51 of the license managing server 50 generates the license file 90 based on information included in the request for use of the license and the license managing table 52, and sends back the generated license file 90 to the license acquiring unit 117 in step S109-6.

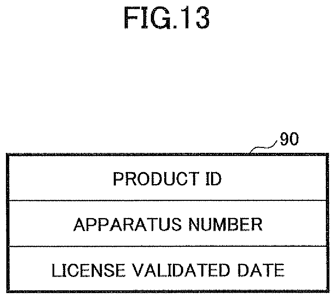

FIG. 13 illustrates a structural example of the license file. Referring to FIG. 13, the license file 90 includes the product ID, the apparatus number, and the license validated date. The product ID is of the sales package for which the license is given by the license file 90 to permit the use of the sales package. The apparatus number is the number of the image forming apparatus 20 in which the sales package corresponding to the product ID is permitted to be used by the license file 90. The validated date is the date of the license which is given by the license file 90.

The product ID is registered in the license file 90 based on the product key illustrated in FIG. 8. When the product key is for a group license such that plural different product IDs are registered in the license managing table 52 corresponding to the product key, the license managing unit 51 generates the license files 90 for each of the sales packages. Therefore, in the case of the group license, the product IDs of the sales packages are registered as the product IDs of the license files 90 instead of the group ID.

The apparatus number included in the request for use of the license is registered as the apparatus number of the license file 90. The product key included in the request for use of the license and the corresponding product ID are registered in association with the time such as year, month and date which is obtained by adding the license validated period registered in the license managing table to the present time.

The license acquiring unit 117 carries out step S109-5 when the sales package is successfully acquired by downloading it by the package acquiring unit 116. The license acquiring unit 117 does not acquire the license file 90 when the sales package is not normally acquired. When the sales package is not acquired, it is not possible to install the sales package. However, when the license file related to the sales package is acquired, the license starts to be used. This may cause a disadvantage for the user in terms of the license validated period or the like.

In step S109-7, the installation controlling unit 118 requests the current apparatus 20 to send the unsolved dependent package to the current apparatus 20 and to install the unsolved package in the current apparatus 20 when the unsolved package is acquired in step S109-4. The request processing unit 21 installs the unsolved package and records information such as the product ID of the unsolved package in the installation information managing table 23.

Thereafter, the installation controlling unit 118 sends a query about the result of installation of the unsolved package to the current apparatus in step S109-8. The queries, which are so-called polling, are repeated until the result of the installation is returned.

The reason why the unsolved package is first installed is to avoid failure of the installation of the sales package because the depended on component is not installed.

Then, the installation controlling unit 118 sends the sales package acquired in step S109-4 and the license file 90 acquired in step S109-6, and requests installation and activation of the sales package to the current apparatus in step S109-9. The request processing unit 21 installs the sales package and records information such as the product ID of the sales package in the installation information managing table 23. The request processing unit 21 records the license file 90 in a predetermined storage area.

Thereafter, the installation controlling unit 118 sends a query about the result of installation of the sales package to the current apparatus in step S109-10. These queries, which are so-called polling, are repeated until the installations are completed in the current apparatuses and the results of the installations are returned.

Described next is a process carried out in the license managing unit 51 of the license managing server 50 in response to the request for use of the license in step S109-5.

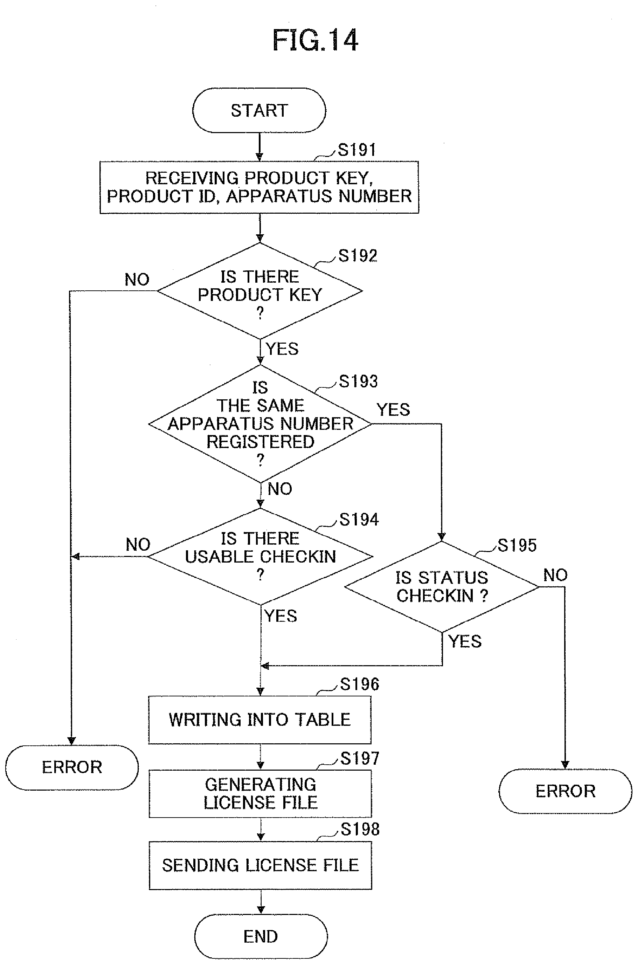

FIG. 14 is a flowchart illustrating a procedure of generating a license file with a license managing unit. Referring to FIG. 14, an example of processing one product key is explained. When the plural product keys are received, the steps on and after step S192 are processed for each of the product keys.

In step S191 corresponding to step S109-5 in FIG. 7, the license managing unit 51 receives the request for use of the license including the product key, the product ID, and the apparatus number from the installation controlling unit 118. Thereafter, the license managing unit 51 determines whether it is possible to use the license for the product key. Specifically, the license managing unit 51 confirms whether the received product key is registered in the license managing table 52 in step S192. When the product key is registered in Yes of step S192, the license managing unit 51 confirms whether the same apparatus number as the received apparatus number is registered in correspondence with the received product key in the license managing table 52 in step S193. When the same apparatus number is not registered in NO of step S193, the license managing unit 51 confirms whether a record of which status is "checkin" exists in the license managing table 52 in step S194. When the record of which status is "checkin" exists in step S194, the license managing unit 51 records the received apparatus number in the record and changes the status from "checkin" to "checkout" in step S196. It is recorded in the license managing table 52 that the license corresponding to the product key is used. Further, the license managing unit 51 records the date obtained by adding the license validated period to the present date to the record as the license validated date when the license validated period is recorded in the record, namely the record corresponds to the time-limited license.

Then, the license managing unit 51 generates the license file 90 (see FIG. 13) including the product ID, the apparatus number, and the validated date of the record in step S197. The license file 90 is generated for each record of the license managing table 52,or said differently, for each license of the sales package. Subsequently, the license managing unit 51 returns the generated license file 90 to the installation controlling unit 118 of the apparatus managing server 10 in step S198.

On the other hand, when there is a record which has the above product key and of which apparatus number the same as the received apparatus number is registered in YES of step S193, the license managing unit 51 confirms whether the status of the record is "checkin" in step S195. When the status is "checkin" in YES of step S195, the process of step S196 and the succeeding processes are carried out.

When the record having the above product key does not exist in the license managing table 52 in NO of step S192, when there is no record of which status is "checkin" among the records related to the product keys and the received product IDs in the license managing table 52 in NO of step S194, or when the status of the record registering the apparatus number the same as the received apparatus number corresponding to the received product key is not "checkin" in NO of step S195, the license managing unit 51 determines there is an ERROR and does not generate and issue the license.

The license file 90 is used by the image forming apparatus 20 when the function package included in the installed sales package is invoked to check the license with the license checking unit 22. The license checking unit 22 permits activation of the function package when the license file 90 corresponding to the sales package to which the function package to be invoked belongs, when the apparatus number of the license file 90 and the apparatus number of the image forming apparatus 20 in which the function package is to be activated are the same, and when the validated data of the license file 90 does not expire. In the case where the above conditions are not established, the function package is not activated.

Next, uninstalling the sales package and deactivation of removing the license are explained.

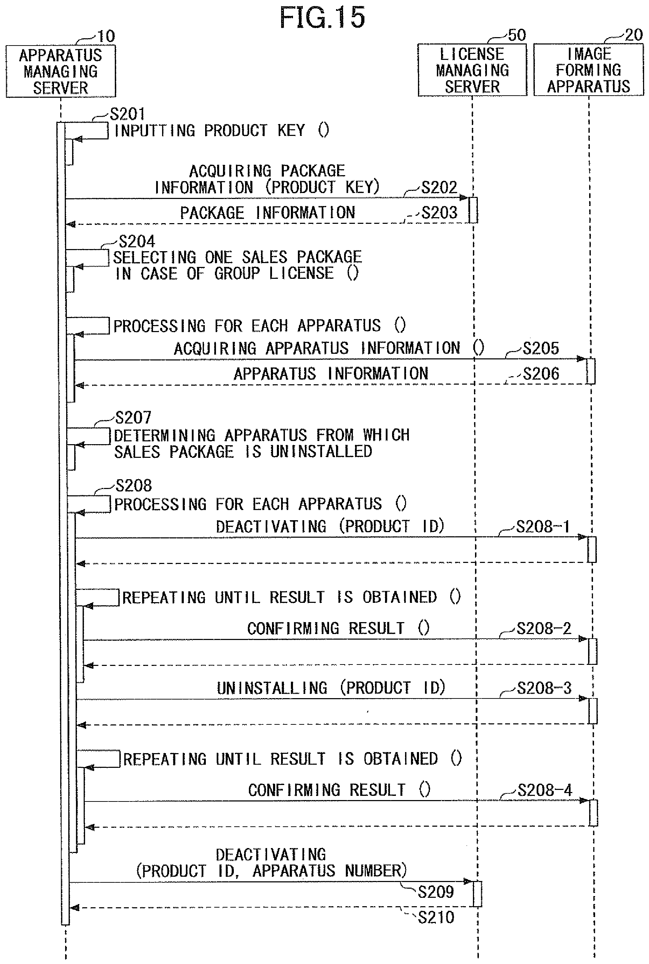

FIG. 15 is a sequence diagram illustrating a procedure of uninstallation and deactivation of the sales package.

The UI controlling unit 111 of the apparatus managing server 10 receives input of the product key to be uninstalled from the user through a screen for uninstalling the packages which are displayed on the display device 106 in step S201. Subsequently, the package information acquiring unit 112 designates the input product key, and sends an acquisition request for the product key to the license managing server 50 in step S202.

Then, the license managing unit 51 of the license managing server 50 returns package information recorded in the record having the received product key to the package information acquiring unit 112 in step S203. When the received product key belongs to a group license, package information corresponding to plural sales packages is returned.

When the product key belongs to the group license, or said differently, when the package information of plural sales packages is received, the UI controlling unit 111 causes a sales package selection screen including list information of the sales package to be displayed on the display device 10 so that the user can select the sales package to be uninstalled in step S204. Hereinafter, the selected sales package to be uninstalled is referred to as "current sales package".

Thereafter, the apparatus information acquiring unit 113 sends acquisition requests for the apparatus information to the image forming apparatuses 20 in step S205. The request processing units 21 of the image forming apparatus 20 receiving the acquisition request for the apparatus information acquires information recorded in the installation information managing table 23, and returns information including the acquired information and the apparatus number of the image forming apparatus 20 to the apparatus information acquiring unit 113 as the apparatus information in step S206.

The IP addresses, host names or the like of the image forming apparatuses 20 of which apparatus information is to be acquired are previously stored in the auxiliary storage device 102 of the apparatus managing server 10. It is also possible to acquire the apparatus information of the image forming apparatus 20 after dynamically searching the image forming apparatuses 20 connected to the network 30 by issuing a broadcast or the like onto the network 30 with the apparatus information acquiring unit 113.

Thereafter, the uninstallation destination determining unit 119 checks matching between the package information acquired in step S203 and the apparatus information acquired by the image forming apparatuses 20 in step S206 to thereby determine the image forming apparatus 20 in which the current sales package is installed in step S207. Specifically, it is determined by the uninstallation destination determining unit 119 that the image forming apparatus 20 corresponds to the product ID included in the package information received by the package information acquiring unit 112 in step S203.

Next, loop processes are carried out for each image forming apparatus 20 from which the sales packages are uninstalled in step S208. Hereinafter, the image forming apparatuses 20 to be processed in the loop processes are referred to as "current apparatus".

The deactivating unit 120 designates the product IDs of the current sales packages, and sends a deactivate request of removing the license file 90 to the current apparatuses 20. The request processing units 21 of the current apparatuses 20 remove the license files 90 corresponding to the designated product IDs.

Next, the deactivating unit 120 sends a query about the results of removing the license files 90 to the current apparatuses 20 in step S208-2. Next, the uninstallation controlling unit 121 designates the product ID of the current sales package, and sends a request for uninstalling the sales package to the current apparatus 20 in step S208-3. The request processing units 21 of the current apparatuses 20 remove the license files 90 corresponding to the designated product IDs to thereby uninstall the sales packages.

Next, the deactivating unit 120 sends a query about the results of uninstalling the current sales packages to the current apparatuses 20 in step S208-4. These queries, which are so-called polling, are repeated until the uninstallations are completed in the current apparatuses 20 and the results of the uninstallations are returned.

After the uninstallation of all the image forming apparatuses 20 to be uninstalled are carried out, the deactivating unit 120 designates the product ID of the current sales package and the apparatus numbers of the current apparatuses (the image forming apparatuses 20), and sends requests for deactivation of removing the licenses to the license managing units 51 of the license managing server 50 in steps S209. The license managing unit 51 changes the statuses of the records of the designated product IDs and the designated apparatus numbers from "checkout" to "checkin" in the license managing table 52. The information that the license is not used is recorded in the license managing table 52. The deactivation is possible only for the licenses having the status of "checkout". Therefore, when the deactivation is done on the record not having the status of "checkout", it is determined by the license managing unit 51 that the deactivation has failed.

Next, the license managing unit 51 returns the results of the deactivation whether the process is successful or failed to the deactivating unit 120 of the image forming apparatus 20 in step S210.

After the processes illustrated in FIG. 15 are completed, the image forming apparatus 20 cannot use the function package included in the sales package. On the other hand, since the license of the sales package is removed, another image forming apparatus 20 can reuse the license within the validated date of the license. Said differently, the deactivation process is especially useful when the license of the sales package in the image forming apparatus 20 is moved to the other image forming apparatus 20 because of the reasons such as expiration of a lease period.

As described, the apparatus managing system 1 of the embodiment can automatically install the sales package corresponding to the product key and introduce the license file in the image forming apparatus 20. Therefore, it is possible to greatly reduce the work burden for users. Then, end users of the image forming apparatuses 20 can construct execution environments of sales packages including the sales packages in the image forming apparatuses 20 without relying on customer engineers.

Further, the apparatus managing server 10 of the embodiment collectively enables the sales packages to be installed and activated in the plural image forming apparatuses 20. This makes it possible for the users to reduce the work burden.

The programs and the licenses of the programs are appropriately introduced by the embodiment.

Although an example of the image forming apparatus 20 has been described as an example of electronic apparatuses, the embodiment is not limited only to the image forming apparatus 20, and any electronic apparatuses in which programs are installed can have the embodiment applied.

Although there has been described about the embodiment of the present invention, the present invention is not limited to the above embodiment, and various modifications and changes are possible in a scope of the present invention described in the claims.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiment of the present invention has been described in detail, it should be understood that various changes, substitutions, and alterations could be made thereto without departing from the scope of the invention.

This patent application is based on Japanese Priority Patent Application No. 2009-187799 filed on August 13, 2009.

## Claims

1. A program introduction supporting server (10) connected, via a network, to a license managing server (50) configured to store, by correlating a license identifier of a program license for a program for an electronic apparatus (20), a program product identifier of the program and a license status indicative of a state of using the program license corresponding to the license identifier, and
a program managing server (60) configured to store the program product identifier of the program and the program by correlating the program product identifier of the program and the program,
the program introduction supporting server (10) comprising:
a product information acquiring unit (112) configured to acquire the program product identifier associated with the license identifier in response to an input of the license identifier;
a program acquiring unit (116) configured to acquire the program corresponding to the program product identifier acquired by the product information acquiring unit from the program managing server (60);
a license acquiring unit (117) configured to acquire a license file (90) corresponding to the license identifier by designating the license identifier from the license managing server and updating the license state of the license identifier to a value indicating that the license is used; and
an installation controlling unit (118) configured to send the acquired program and the acquired license file (90) to the electronic apparatus (20) connected to the program introduction supporting server via the network,
**characterized by** the program introduction supporting server (10) further comprising:
an apparatus information acquiring unit (113) configured to acquire from the electronic apparatus (20) apparatus information including an apparatus number uniquely identifying the image forming apparatus 20; and
the license acquiring unit (117) being further configured to register in the license file (90) the apparatus number of the image forming apparatus (20) acquired by the apparatus information acquiring unit (113),
wherein the electronic apparatus (20) comprises a license checking unit (22) configured to activate the acquired program when the apparatus number of the acquired license file (90) and the electronic apparatus (20) in which the program is to be activated are the same.

2. The program introduction supporting server (10) according to claim 1, further comprising:
an installation destination reception unit configured to receive designation of the electronic apparatus (20) into which the program is to be installed,
wherein the installation controlling unit sends the program and the license file to the electronic apparatus corresponding to the designation.

3. The program introduction supporting server (10) according to claim 1,
wherein when the acquisition of the program by the program acquiring unit fails, the license acquiring unit does not acquire the license file.

4. The program introduction supporting server (10) according to claim 1, further comprising:
an apparatus information acquiring unit configured to receive apparatus information including the program product identifier of the program installed in the electronic apparatus; and
an appropriateness confirming unit configured to send the apparatus information and the program product identifier acquired by the product information acquiring unit to the program managing server to cause the program managing server to determine whether a depended on program on which the program corresponding to the program product identifier depends in reference to a dependency managing table which stores a dependency relationship between the program and the depended on program,
wherein when the depended on program is not installed in the electronic apparatus, the program acquiring unit acquires the depended on program from the program managing server.

5. The program introduction supporting server (10) according to claim 1, further comprising:
a second apparatus information acquiring unit configured to receive second apparatus information including the program product identifier of the program installed in the electronic apparatus from the electronic apparatus;
an uninstallation destination determining unit configured to determine the electronic apparatus in which the program corresponding to the program product identifier is installed based on the program product identifier which is acquired from the license managing server on the basis of the license identifier designated in a request input of uninstalling the program in response to the request input, and the second apparatus information acquired from the electronic apparatus by the second apparatus information acquiring unit; and
a deactivating unit configured to cause the electronic apparatus to remove the license file, and cause the license managing server to update the license status corresponding to the license identifier to indicate that the license is not used.

6. A program introduction supporting system comprising:
a license managing server (50) configured to store, by correlating a license identifier of a program license for a program for an electronic apparatus, a program product identifier of the program and a license status indicative of a state of using the program license corresponding to the license identifier by correlating the license identifier, the program product identifier, and the license status;
a program managing server (50) configured to store the program product identifier of the program and the program by correlating the program product identifier and the program; and
a program introduction supporting server (10),
wherein the program introduction supporting server includes
a product information acquiring unit (112) configured to acquire the program product identifier associated with the license identifier in response to an input of the license identifier;
a program acquiring unit (116)configured to acquire the program corresponding to the program product identifier acquired by the product information acquiring unit from the program managing server (60);
a license acquiring unit (117) configured to acquire a license file corresponding to the license identifier by designating the license identifier from the license managing server and updating the license state of the license identifier to a value indicating that the license is used; and
an installation controlling unit (118) configured to send the acquired program and the acquired license file to the electronic apparatus connected to the program introduction supporting server via the network,
**characterized by** the program introduction supporting server (10) further comprising:
an apparatus information acquiring unit (113) configured to acquire from the electronic apparatus (20) apparatus information including an apparatus number uniquely identifying the image forming apparatus 20; and
the license acquiring unit (117) being further configured to register in the license file (90) the apparatus number of the image forming apparatus (20) acquired by the apparatus information acquiring unit (113),
wherein the electronic apparatus (20) comprises a license checking unit (22) configured to activate the acquired program when the apparatus number of the acquired license file (90) and the electronic apparatus (20) in which the program is to be activated are the same.

7. The program introduction supporting system according to claim 6, further comprising:
an installation destination reception unit (114) configured to receive designation of the electronic apparatus into which the program is to be installed,
wherein the installation controlling unit (118) sends the program and the license file to the electronic apparatus corresponding to the designation.

8. The program introduction supporting system according to claim 6,
wherein when the acquisition of the program by the program acquiring unit fails, the license acquiring unit (117) does not acquire the license file.

9. The program introduction supporting system according to claim 6, further comprising:
an apparatus information acquiring unit (112) configured to receive apparatus information including the program product identifier of the program installed in the electronic apparatus (20); and
an appropriateness confirming unit (115) configured to send the apparatus information and the program product identifier acquired by the product information acquiring unit (112) to the program managing server (60) to cause the program managing server to determine whether a depended on program on which the program corresponding to the program product identifier depends in reference to a dependency managing table which stores a dependency relationship between the program and the depended on program,
wherein when the depended on program is not installed in the electronic apparatus (20), the program acquiring unit acquires the depended on program from the program managing server (60).

10. The program introduction supporting system according to claim 6, further comprising:
a second apparatus information acquiring unit configured to receive second apparatus information including the program product identifier of the program installed in the electronic apparatus from the electronic apparatus;
an uninstallation destination determining unit (119) configured to determine the electronic apparatus in which the program corresponding to the program product identifier is installed based on the program product identifier which is acquired from the license managing server on the basis of the license identifier designated in a request input of uninstalling the program in response to the request input, and the second apparatus information acquired from the electronic apparatus by the second apparatus information acquiring unit; and
a deactivating unit (120) configured to cause the electronic apparatus to remove the license file, and cause the license managing server to update the license status corresponding to the license identifier to indicate that the license is not used.

11. A computer readable recording medium embodied with a computer program representing a sequence of instruction, which when executed by a computer included in a program introduction supporting server (10) connected to a license managing server (50) configured to store, by correlating a license identifier of a program license for a program for an electronic apparatus (20), a program product identifier of the program and a license status indicative of a state of using the program license corresponding to the license identifier, and
a program managing server (60) configured to store the program product identifier of the program and the program by correlating the program product identifier of the program and the program, the instructions cause the computer to function as:
a product information acquiring unit (112) configured to acquire the program product identifier associated with the license identifier in response to an input of the license identifier;
a program acquiring unit (112) configured to acquire the program corresponding to the program product identifier acquired by the product information acquiring unit from the program managing server (60);
a license acquiring unit (117) configured to acquire a license file (90) corresponding to the license identifier by designating the license identifier from the license managing server and updating the license state of the license identifier to a value indicating that the license is used; and
an installation controlling unit (118) configured to send the acquired program and the acquired license file to the electronic apparatus connected to the program introduction supporting server via the network,
**characterized by** the program introduction supporting server (10) further comprising:
an apparatus information acquiring unit (113) configured to acquire from the electronic apparatus (20) apparatus information including an apparatus number uniquely identifying the image forming apparatus 20; and
the license acquiring unit (117) being further configured to register in the license file (90) the apparatus number of the image forming apparatus (20) acquired by the apparatus information acquiring unit (113),
wherein the electronic apparatus (20) comprises a license checking unit (22) configured to activate the acquired program when the apparatus number of the acquired license file (90) and the electronic apparatus (20) in which the program is to be activated are the same.

12. The computer readable recording medium according to claim 11, the instructions cause the computer to further function as:
an installation destination reception unit (114) configured to receive designation of the electronic apparatus into which the program is to be installed,
wherein the installation controlling unit sends the program and the license file to the electronic apparatus corresponding to the designation.

13. The computer readable recording medium according to claim 11,
wherein when the acquisition of the program by the program acquiring unit fails, the license acquiring unit (117) does not acquire the license file.

14. The computer readable recording medium according to claim 11, wherein the instructions cause the computer to further function as:
an apparatus information acquiring unit (113) configured to receive apparatus information including the program product identifier of the program installed in the electronic apparatus; and
an appropriateness confirming unit (115) configured to send the apparatus information and the program product identifier acquired by the product information acquiring unit to the program managing server to cause the program managing server to determine whether a depended on program on which the program corresponding to the program product identifier depends in reference to a dependency managing table which stores a dependency relationship between the program and the depended on program,
wherein when the depended on program is not installed in the electronic apparatus, the program acquiring unit acquires the depended on program from the program managing server.

15. The computer readable recording medium according to claim 11, wherein the instructions cause the computer to further function as:
a second apparatus information acquiring unit configured to receive second apparatus information including the program product identifier of the program installed in the electronic apparatus from the electronic apparatus;
an uninstallation destination determining unit (119) configured to determine the electronic apparatus in which the program corresponding to the program product identifier is installed based on the program product identifier which is acquired from the license managing server on the basis of license identifier designated in a request input of uninstalling the program in response to the request input, and the second apparatus information acquired from the electronic apparatus by the second apparatus information acquiring unit; and
a deactivating unit (120) configured to cause the electronic apparatus to remove the license file, and cause the license managing server to update the license status corresponding to the license identifier to indicate that the license is not used.

## Patentansprüche

1. Unterstützender Programmeinführungsserver (10), der über ein Netzwerk mit einem Lizenzverwaltungsserver (50) verbunden ist, der konfiguriert ist, durch ein Korrelieren einer Lizenzkennung einer Programmlizenz für ein Programm für ein elektronisches Gerät (20), eine Programmproduktkennung des Programms und einen Lizenzstatus zu speichern, der einen Stand der Verwendung der Programmlizenz entsprechend der Lizenzkennung anzeigt, und
ein Programmverwaltungsserver (60), der konfiguriert ist, die Programmproduktkennung des Programms und das Programm durch ein Korrelieren der Programmproduktkennung des Programms und des Programms zu speichern,
wobei der unterstützende Programmeinführungsserver (10) Folgendes umfasst:
eine Produktinformationserfassungseinheit (112), die konfiguriert ist, die Programmproduktkennung, die der Lizenzkennung zugeordnet ist, als Reaktion auf eine Eingabe der Lizenzkennung zu erfassen;
eine Programmerfassungseinheit (116), die konfiguriert ist, das Programm zu erfassen, das der Programmproduktkennung entspricht, die durch die Produktinformationserfassungseinheit von dem Programmverwaltungsserver (60) erfasst wurde;
eine Lizenzerfassungseinheit (117), die konfiguriert ist, eine Lizenzdatei (90) zu erfassen, die der Lizenzkennung entspricht, durch ein Kennzeichnen der Lizenzkennung von dem Lizenzverwaltungsserver und ein Aktualisieren des Lizenzstatus der Lizenzkennung zu einem Wert, der anzeigt, dass die Lizenz verwendet wird; und
eine Installationssteuereinheit (118), die konfiguriert ist, das erfasste Programm und die erfasste Lizenzdatei (90) zu dem elektronischen Gerät (20) zu senden, das über das Netzwerk mit dem unterstützenden Programmeinführungsserver verbunden ist,
**dadurch gekennzeichnet, dass** der unterstützende Programmeinführungsserver (10) ferner Folgendes umfasst:
eine Geräteinformationserfassungseinheit (113), die konfiguriert ist, von dem elektronischen Gerät (20) Geräteinformation, einschließlich einer Gerätenummer, die das Bilderzeugungsgerät 20 eindeutig identifiziert, zu erfassen; und
wobei die Lizenzerfassungseinheit (117) ferner konfiguriert ist, in der Lizenzdatei (90) die Gerätenummer des Bilderzeugungsgeräts (20), die durch die Geräteinformationserfassungseinheit (113) erfasst wurde, zu registrieren,
wobei das elektronische Gerät (20) eine Lizenzprüfeinheit (22) umfasst, die konfiguriert ist, das erfasste Programm zu aktivieren, wenn die Gerätenummer der erfassten Lizenzdatei (90) und des elektronischen Geräts (20), in dem das Programm aktiviert werden soll, dieselbe ist.

2. Unterstützender Programmeinführungsserver (10) nach Anspruch 1, ferner umfassend:
eine Installationszielempfangseinheit, die konfiguriert ist, eine Kennzeichnung des elektronischen Geräts (20) zu erhalten, in das das Programm installiert werden soll,
wobei die Installationssteuereinheit das Programm und die Lizenzdatei zu dem elektronischen Gerät sendet, das der Kennzeichnung entspricht.

3. Unterstützender Programmeinführungsserver (10) nach Anspruch 1,
wobei, wenn das Erfassen des Programms durch die Programmerfassungseinheit fehlschlägt, die Lizenzerfassungseinheit die Lizenzdatei nicht erfasst.

4. Unterstützender Programmeinführungsserver (10) nach Anspruch 1, ferner umfassend:
eine Geräteinformationserfassungseinheit, die konfiguriert ist, Geräteinformation, einschließlich der Programmproduktkennung des Programms, das in dem elektronischen Gerät installiert ist, zu empfangen; und
eine Eignungsbestätigungseinheit, die konfiguriert ist, die Geräteinformation und die Programmproduktkennung, die durch die Produktinformationserfassungseinheit erfasst wurde, zu dem Programmverwaltungsserver zu senden, um den Programmverwaltungsserver dazu zu veranlassen, zu bestimmen, ob ein Programm, von dem ein anderes abhängig ist, von dem das Programm, das der Programmproduktkennung entspricht, in Bezug auf eine Abhängigkeitsverwaltungstabelle abhängt, die eine Abhängigkeitsbeziehung zwischen dem Programm und dem Programm, von dem ein anderes abhängig ist, speichert,
wobei die Programmerfassungseinheit, wenn das Programm, von dem ein anderes abhängig ist, in dem elektronischen Gerät nicht installiert ist, das Programm, von dem ein anderes abhängig ist, von dem Programmverwaltungsserver erfasst.

5. Unterstützender Programmeinführungsserver (10) nach Anspruch 1, ferner umfassend:
eine zweite Geräteinformationserfassungseinheit, die konfiguriert ist, eine zweite Geräteinformation, einschließlich der Programmproduktkennung des Programms, das in dem elektronischen Gerät installiert ist, von dem elektronischen Gerät zu erhalten;
eine Deinstallationszielbestimmungseinheit, die konfiguriert ist, das elektronische Gerät, in dem das Programm, das der Programmproduktkennung entspricht, installiert ist, zu bestimmen, basierend auf der Programmprodulctkennung, die von dem Lizenzverwaltungsserver erfasst wird, basierend auf der Lizenzkennung, der in einer Anfrageeingabe zum Deinstallieren des Programms als Reaktion auf die Anfrageeingabe gekennzeichnet ist, und der zweiten Geräteinformation, die von dem elektronischen Gerät durch die zweite Geräteinformationserfassungseinheit erfasst wurde; und
eine Deaktivierungseinheit, die konfiguriert ist, das elektronische Gerät dazu zu veranlassen, die Lizenzdatei zu entfernen, und den Lizenzverwaltungsserver dazu zu veranlassen, den Lizenzstatus entsprechend der Lizenzkennung zu aktualisieren, um anzuzeigen, dass die Lizenz nicht verwendet wird.

6. Unterstützendes Programmeinführungssystem, umfassend:
einen Lizenzverwaltungsserver (50), der konfiguriert ist, durch ein Korrelieren einer Lizenzkennung einer Programmlizenz für ein Programm für ein elektronisches Gerät, eine Programmproduktkennung des Programms und einen Lizenzstatus zu speichern, der einen Stand der Verwendung der Programmlizenz entsprechend der Lizenzkennung anzeigt, durch ein Korrelieren der Lizenzkennung, der Programmproduktkennung und des Lizenzstatus;
einen Programmverwaltungsserver (50), der konfiguriert ist, die Programmproduktkennung des Programms und das Programm durch ein Korrelieren der Programmproduktkennung und des Programms zu speichern; und
einen unterstützenden Programmeinfuhrungsserver (10),
wobei der unterstützende Programmeinführungsserver Folgendes umfasst
eine Produktinformationserfassungseinheit (112), die konfiguriert ist, die Programmproduktkennung, die der Lizenzkennung zugeordnet ist, als Reaktion auf eine Eingabe der Lizenzkennung zu erfassen;
eine Programmerfassungseinheit (116), die konfiguriert ist, das Programm zu erfassen, das der Programmproduktkennung entspricht, die durch die Produktinformationserfassungseinheit von dem Programmverwaltungsserver (60) erfasst wurde;
eine Lizenzerfassungseinheit (117), die konfiguriert ist, eine Lizenzdatei zu erfassen, die der Lizenzkennung entspricht, durch ein Kennzeichnen der Lizenzkennung von dem Lizenzverwaltungsserver und ein Aktualisieren des Lizenzstatus der Lizenzkennung zu einem Wert, der anzeigt, dass die Lizenz verwendet wird; und
eine Installationssteuereinheit (118), die konfiguriert ist, das erfasste Programm und die erfasste Lizenzdatei zu dem elektronischen Gerät zu senden, das über das Netzwerk mit dem unterstützenden Programmeinführungsserver verbunden ist,
**dadurch gekennzeichnet, dass** der unterstützende Programmeinführungsserver (10) ferner Folgendes umfasst:
eine Geräteinformationserfassungseinheit (113), die konfiguriert ist, von dem elektronischen Gerät (20) Geräteinformation, einschließlich einer Gerätenummer, die das Bilderzeugungsgerät 20 eindeutig identifiziert, zu erfassen; und
wobei die Lizenzerfassungseinheit (117) ferner konfiguriert ist, in der Lizenzdatei (90) die Gerätenummer des Bilderzeugungsgeräts (20), die durch die Geräteinformationserfassungseinheit (113) erfasst wurde, zu registrieren,
wobei das elektronische Gerät (20) eine Lizenzprüfeinheit (22) umfasst, die konfiguriert ist, das erfasste Programm zu aktivieren, wenn die Gerätenummer der erfassten Lizenzdatei (90) und des elektronischen Geräts (20), in dem das Programm aktiviert werden soll, dieselbe ist.

7. Unterstützendes Programmeinführungssystem nach Anspruch 6, ferner umfassend:
eine Installationszielempfangseinheit (114), die konfiguriert ist, eine Kennzeichnung des elektronischen Geräts zu erhalten, in das das Programm installiert werden soll,
wobei die Installationssteuereinheit (118) das Programm und die Lizenzdatei zu dem elektronischen Gerät sendet, das der Kennzeichnung entspricht.

8. Unterstützendes Programmeinführungssystem nach Anspruch 6,
wobei, wenn das Erfassen des Programms durch die Programmerfassungseinheit fehlschlägt, die Lizenzerfassungseinheit (117) die Lizenzdatei nicht erfasst.

9. Unterstützendes Programmeinführungssystem nach Anspruch 6, ferner umfassend:
eine Geräteinformationserfassungseinheit (112), die konfiguriert ist, Geräteinformation, einschließlich der Programmproduktkennung des Programms, das in dem elektronischen Gerät (20) installiert ist, zu empfangen; und
eine Eignungsbestätigungseinheit (115), die konfiguriert ist, die Geräteinformation und die Programmproduktkennung, die durch die Produktinformationserfassungseinheit (112) erfasst wurde, zu dem Programmverwaltungsserver (60) zu senden, um den Programmverwaltungsserver dazu zu veranlassen, zu bestimmen, ob ein Programm, von dem ein anderes abhängig ist, von dem das Programm, das der Programmproduktkennung entspricht, in Bezug auf eine Abhängigkeitsverwaltungstabelle abhängt, die eine Abhängigkeitsbeziehung zwischen dem Programm und dem Programm, von dem ein anderes abhängig ist, speichert,
wobei die Programmerfassungseinheit, wenn das Programm, von dem ein anderes abhängig ist, in dem elektronischen Gerät (20) nicht installiert ist, das Programm, von dem ein anderes abhängig ist, von dem Programmverwaltungsserver (60) erfasst.

10. Unterstützendes Programmeinführungssystem nach Anspruch 6, ferner umfassend:
eine zweite Geräteinformationserfassungseinheit, die konfiguriert ist, zweite Geräteinformation, einschließlich der Programmproduktkennung des Programms, das in dem elektronischen Gerät installiert ist, von dem elektronischen Gerät zu erhalten;
eine Deinstallationszielbestimmungseinheit (119), die konfiguriert ist, das elektronische Gerät, in dem das Programm, das der Programmproduktkennung entspricht, installiert ist, zu bestimmen, basierend auf der Programmproduktkennung, die von dem Lizenzverwaltungsserver erfasst wird, basierend auf der Lizenzkennung, der in einer Anfrageeingabe zum Deinstallieren des Programms als Reaktion auf die Anfrageeingabe gekennzeichnet ist, und der zweiten Geräteinformation, die von dem elektronischen Gerät durch die zweite Geräteinformationserfassungseinheit erfasst wurde; und
eine Deaktivierungseinheit (120), die konfiguriert ist, das elektronische Gerät dazu zu veranlassen, die Lizenzdatei zu entfernen, und den Lizenzverwaltungsserver dazu zu veranlassen, den Lizenzstatus entsprechend der Lizenzkennung zu aktualisieren, um anzuzeigen, dass die Lizenz nicht verwendet wird.

11. Computerlesbares Aufzeichnungsmedium, das mit einem Computerprogramm ausgebildet ist, das eine Befehlsfolge darstellt, das, wenn es durch einen Computer ausgeführt wird, der in einem unterstützenden Programmeinführungsserver (10) enthalten ist, der mit einem Lizenzverwaltungsserver (50) verbunden ist, der konfiguriert ist, durch ein Korrelieren einer Lizenzkennung einer Programmlizenz für ein Programm für ein elektronisches Gerät (20), eine Programmproduktkennung des Programms und einen Lizenzstatus zu speichern, der einen Stand der Verwendung der Programmlizenz entsprechend der Lizenzkennung anzeigt, und
ein Programmverwaltungsserver (60), der konfiguriert ist, die Programmproduktkennung des Programms und das Programm durch ein Korrelieren der Programmproduktkennung des Programms und des Programms zu speichern, wobei die Befehle den Computer dazu veranlassen, als Folgendes zu funktionieren:
eine Produktinformationserfassungseinheit (112), die konfiguriert ist, die Programmproduktkennung, die der Lizenzkennung zugeordnet ist, als Reaktion auf eine Eingabe der Lizenzkennung zu erfassen;
eine Programmerfassungseinheit (112), die konfiguriert ist, das Programm zu erfassen, das der Programmproduktkennung entspricht, die durch die Produktinformationserfassungseinheit von dem Programmverwaltungsserver (60) erfasst wurde;
eine Lizenzerfassungseinheit (117), die konfiguriert ist, eine Lizenzdatei (90) zu erfassen, die der Lizenzkennung entspricht, durch ein Kennzeichnen der Lizenzkennung von dem Lizenzverwaltungsserver und ein Aktualisieren des Lizenzstatus der Lizenzkennung zu einem Wert, der anzeigt, dass die Lizenz verwendet wird; und
eine Installationssteuereinheit (118), die konfiguriert ist, das erfasste Programm und die erfasste Lizenzdatei zu dem elektronischen Gerät zu senden, das über das Netzwerk mit dem unterstützenden Programmeinführungsserver verbunden ist,
**dadurch gekennzeichnet, dass** der unterstützende Programmeinführungsserver (10) ferner Folgendes umfasst:
eine Geräteinformationserfassungseinheit (113), die konfiguriert ist, von dem elektronischen Gerät (20) Geräteinformation, einschließlich einer Gerätenummer, die das Bilderzeugungsgerät 20 eindeutig identifiziert, zu erfassen; und
wobei die Lizenzerfassungseinheit (117) ferner konfiguriert ist, in der Lizenzdatei (90) die Gerätenummer des Bilderzeugungsgeräts (20), die durch die Geräteinformationserfassungseinheit (113) erfasst wurde, zu registrieren,
wobei das elektronische Gerät (20) eine Lizenzprüfeinheit (22) umfasst, die konfiguriert ist, das erfasste Programm zu aktivieren, wenn die Gerätenummer der erfassten Lizenzdatei (90) und des elektronischen Geräts (20), in dem das Programm aktiviert werden soll, dieselbe ist.

12. Computerlesbares Aufzeichnungsmedium nach Anspruch 11, wobei die Befehle den Computer dazu veranlassen, ferner als Folgendes zu funktionieren:
eine Installationszielempfangseinheit (114), die konfiguriert ist, eine Kennzeichnung des elektronischen Geräts zu erhalten, in das das Programm installiert werden soll,
wobei die Installationssteuereinheit das Programm und die Lizenzdatei zu dem elektronischen Gerät sendet, das der Kennzeichnung entspricht.

13. Computerlesbares Aufzeichnungsmedium nach Anspruch 11,
wobei, wenn das Erfassen des Programms durch die Programmerfassungseinheit fehlschlägt, die Lizenzerfassungseinheit (117) die Lizenzdatei nicht erfasst.

14. Computerlesbares Aufzeichnungsmedium nach Anspruch 11, wobei die Befehle den Computer dazu veranlassen, ferner als Folgendes zu funktionieren:
eine Geräteinformationserfassungseinheit (113), die konfiguriert ist, Geräteinformation, einschließlich der Programmproduktkennung des Programms, das in dem elektronischen Gerät installiert ist, zu erhalten; und
eine Eignungsbestätigungseinheit (115), die konfiguriert ist, die Geräteinformation und die Programmproduktkennung, die durch die Produktinformationserfassungseinheit erfasst wurde, zu dem Programmverwaltungsserver zu senden, um den Programmverwaltungsserver dazu zu veranlassen, zu bestimmen, ob ein Programm, von dem ein anderes abhängig ist, von dem das Programm, das der Programmproduktkennung entspricht, in Bezug auf eine Abhängigkeitsverwaltungstabelle abhängt, die eine Abhängigkeitsbeziehung zwischen dem Programm und dem Programm, von dem ein anderes abhängig ist, speichert,
wobei die Programmerfassungseinheit, wenn das Programm, von dem ein anderes abhängig ist, in dem elektronischen Gerät nicht installiert ist, das Programm, von dem ein anderes abhängig ist, von dem Programmverwaltungsserver erfasst.

15. Computerlesbares Aufzeichnungsmedium nach Anspruch 11, wobei die Befehle den Computer dazu veranlassen, ferner als Folgendes zu funktionieren:
eine zweite Geräteinformationserfassungseinheit, die konfiguriert ist, zweite Geräteinformation, einschließlich der Programmproduktkennung des Programms, das in dem elektronischen Gerät installiert ist, von dem elektronischen Gerät zu erhalten;
eine Deinstallationszielbestimmungseinheit (119), die konfiguriert ist, das elektronische Gerät, in dem das Programm, das der Programmproduktkennung entspricht, installiert ist, zu bestimmen, basierend auf der Programmproduktkennung, die von dem Lizenzverwaltungsserver erfasst wird, basierend auf der Lizenzkennung, der in einer Anfrageeingabe zum Deinstallieren des Programms als Reaktion auf die Anfrageeingabe gekennzeichnet ist, und der zweiten Geräteinformation, die von dem elektronischen Gerät durch die zweite Geräteinformationserfassungseinheit erfasst wurde; und
eine Deaktivierungseinheit (120), die konfiguriert ist, das elektronische Gerät dazu zu veranlassen, die Lizenzdatei zu entfernen, und den Lizenzverwaltungsserver dazu zu veranlassen, den Lizenzstatus entsprechend der Lizenzkennung zu aktualisieren, um anzuzeigen, dass die Lizenz nicht verwendet wird.

## Revendications

1. Serveur prenant en charge l'introduction d'un programme (10), connecté par un réseau à un serveur de gestion de licence (50) conçu pour stocker, par la mise en corrélation de l'identifiant de la licence d'un programme destiné à un appareil électronique (20), l'identifiant de produit de programme du programme et un statut de licence indicatif de l'état d'utilisation de la licence de programme correspondant à l'identifiant de licence, et
à un serveur de gestion de programme (60) conçu pour stocker l'identifiant de produit de programme du programme et le programme par mise en corrélation du programme et de l'identifiant de produit du programme,
le serveur prenant en charge l'introduction de programme (10) comprenant :
une unité d'acquisition d'informations de produit (112) conçue pour acquérir l'identifiant de produit de programme associé à l'identifiant de licence en réponse à une entrée de l'identifiant de licence,
une unité d'acquisition de programme (116) conçue pour acquérir le programme correspondant à l'identifiant de produit de programme acquis par l'unité d'acquisition d'informations de produit auprès du serveur de gestion de programme (60),
une unité d'acquisition de licence (117) conçue pour acquérir un fichier de licence (90) correspondant à l'identifiant de licence, par désignation de l'identifiant de licence, auprès du serveur de gestion de licence et par actualisation de l'état de licence de l'identifiant de licence à une valeur indiquant que la licence est utilisée, et
une unité de commande d'installation (118) conçue pour envoyer le programme acquis et le fichier de licence (90) acquis à l'appareil électronique (20) connecté au serveur prenant en charge l'introduction de programme par le biais du réseau ;
**caractérisé en ce que** le serveur prenant en charge l'introduction de programme (10) comprend en outre :
une unité d'acquisition d'informations d'appareil (113) conçue pour acquérir, auprès de l'appareil électronique (20), des informations d'appareil comprenant le numéro de l'appareil qui identifie de manière unique l'appareil de formation d'image 20 ; et
l'unité d'acquisition de licence (117) étant en outre conçue pour enregistrer dans le fichier de licence (90) le numéro d'appareil de l'appareil de formation d'image (20) acquis par l'unité d'acquisition d'informations d'appareil (113) ;
l'appareil électronique (20) comprenant une unité de vérification de licence (22) conçue pour activer le programme acquis lorsque le numéro d'appareil du fichier de licence (90) acquis et de l'appareil électronique (20) dans lequel le programme doit être activé sont les mêmes.

2. Serveur prenant en charge l'introduction de programme (10) selon la revendication 1, comprenant en outre :
une unité de réception de destination d'installation conçue pour recevoir la désignation de l'appareil électronique (20) dans lequel le programme doit être installé ;
l'unité de commande d'installation envoyant le programme et le fichier de licence à l'appareil électronique correspondant à la désignation.

3. Serveur prenant en charge l'introduction de programme (10) selon la revendication 1,
dans lequel, lorsque l'acquisition du programme par l'unité d'acquisition de programme échoue, l'unité d'acquisition de licence n'acquiert pas le fichier de licence.

4. Serveur prenant en charge l'introduction de programme (10) selon la revendication 1, comprenant en outre :
une unité d'acquisition d'informations d'appareil conçue pour recevoir des informations d'appareil comprenant l'identifiant de produit de programme du programme installé dans l'appareil électronique, et
une unité de confirmation de pertinence conçue pour envoyer les informations d'appareil et l'identifiant de produit de programme acquis par l'unité d'acquisition d'informations de produit au serveur de gestion de programme pour amener le serveur de gestion de programme à déterminer si un programme de subordination dont dépend le programme correspondant à l'identifiant de produit de programme par rapport à un tableau de gestion de dépendances dans lequel est stockée une relation de dépendance entre le programme et ledit programme de subordination, et dans lequel
lorsque le programme de subordination n'est pas installé dans l'appareil électronique, l'unité d'acquisition de programme acquiert le programme de subordination auprès du serveur de gestion de programme.

5. Serveur prenant en charge l'introduction de programme (10) selon la revendication 1, comprenant en outre :
une deuxième unité d'acquisition d'informations d'appareil conçue pour recevoir des deuxièmes informations d'appareil comprenant l'identifiant de produit du programme installé dans l'appareil électronique, en provenance de l'appareil électronique ;
une unité de détermination de destination de désinstallation conçue pour déterminer l'appareil électronique dans lequel le programme correspondant à l'identifiant de produit de programme est installé en fonction de l'identifiant de produit de programme qui est acquis auprès du serveur de gestion de licence en fonction de l'identifiant de licence désigné dans une entrée de demande de désinstallation du programme en réponse à l'entrée de la demande, et les deuxièmes informations d'appareil acquises auprès de l'appareil électronique par la deuxième unité d'acquisition d'informations d'appareil ; et
une unité de désactivation conçue pour amener l'appareil électronique à enlever le fichier de licence, et pour amener le serveur de gestion de licence à actualiser le statut de licence correspondant à l'identifiant de licence pour indiquer que la licence n'est pas utilisée.

6. Système prenant en charge l'introduction de programme comprenant :
un serveur de gestion de licence (50) conçu pour stocker, par mise en corrélation de l'identifiant de licence d'un programme destiné à un appareil électronique, l'identifiant de produit du programme et un statut de licence indicatif de l'état d'utilisation de la licence de programme correspondant à l'identifiant de licence, par mise en corrélation de l'identifiant de licence, de l'identifiant de produit de programme et du statut de licence,
un serveur de gestion de programme (50) conçu pour stocker l'identifiant de produit de programme du programme et le programme, par mise en corrélation de l'identifiant de produit de programme et du programme, et
un serveur prenant en charge l'introduction de programme (10) ;
le serveur prenant en charge l'introduction de programme comprenant
une unité d'acquisition d'informations de produit (112) conçue pour acquérir l'identifiant de produit de programme associé à l'identifiant de licence en réponse à une entrée de l'identifiant de licence,
une unité d'acquisition de programme (116) conçue pour acquérir le programme correspondant à l'identifiant de produit de programme acquis par l'unité d'acquisition d'informations de produit auprès du serveur de gestion de programme (60),
une unité d'acquisition de licence (117) conçue pour acquérir un fichier de licence correspondant à l'identifiant de licence, par désignation de l'identifiant de licence, auprès du serveur de gestion de licence et par actualisation de l'état de licence de l'identifiant de licence à une valeur indiquant que la licence est utilisée, et
une unité de commande d'installation (118) conçue pour envoyer le programme acquis et le fichier de licence acquis à l'appareil électronique connecté au serveur prenant en charge l'introduction de programme par le biais du réseau ;
**caractérisé en ce que** le serveur prenant en charge l'introduction de programme (10) comprend en outre :
une unité d'acquisition d'informations d'appareil (113) conçue pour acquérir, auprès de l'appareil électronique (20), des informations d'appareil comprenant le numéro de l'appareil qui identifie de manière unique l'appareil de formation d'image 20, et
l'unité d'acquisition de licence (117) étant en outre conçue pour enregistrer dans le fichier de licence (90) le numéro de l'appareil de formation d'image (20) acquis par l'unité d'acquisition d'informations d'appareil (113) ;
l'appareil électronique (20) comprenant une unité de vérification de licence (22) conçue pour activer le programme acquis lorsque le numéro d'appareil du fichier de licence (90) acquis et de l'appareil électronique (20) dans lequel le programme doit être activé sont les mêmes.

7. Système prenant en charge l'introduction de programme selon la revendication 6, comprenant en outre :
une unité de réception de destination d'installation (114) conçue pour recevoir la désignation de l'appareil électronique dans lequel le programme doit être installé ;
l'unité de commande d'installation (118) envoyant le programme et le fichier de licence à l'appareil électronique correspondant à la désignation.

8. Système prenant en charge l'introduction de programme selon la revendication 6,
dans lequel, lorsque l'acquisition du programme par l'unité d'acquisition de programme échoue, l'unité d'acquisition de licence (117) n'acquiert pas le fichier de licence.

9. Système prenant en charge l'introduction de programme selon la revendication 6, comprenant en outre :
une unité d'acquisition d'informations d'appareil (112) conçue pour recevoir des informations d'appareil comprenant l'identifiant de produit de programme du programme installé dans l'appareil électronique (20), et
une unité de confirmation de pertinence (115) conçue pour envoyer les informations d'appareil et l'identifiant de produit de programme acquis par l'unité d'acquisition d'informations de produit (112) au serveur de gestion de programme (60) pour amener le serveur de gestion de programme à déterminer si un programme de subordination dont dépend le programme correspondant à l'identifiant de produit de programme par rapport à un tableau de gestion de dépendances dans lequel est stockée une relation de dépendance entre le programme et ledit programme de subordination, et dans lequel
lorsque le programme de subordination n'est pas installé dans l'appareil électronique (20), l'unité d'acquisition de programme acquiert le programme de subordination auprès du serveur de gestion de programme (60).

10. Système prenant en charge l'introduction de programme selon la revendication 6, comprenant en outre :
une deuxième unité d'acquisition d'informations d'appareil conçue pour recevoir des deuxièmes informations d'appareil comprenant l'identifiant de produit de programme du programme installé dans l'appareil électronique, en provenance de l'appareil électronique,
une unité de détermination de destination de désinstallation (119) conçue pour déterminer l'appareil électronique dans lequel le programme correspondant à l'identifiant de produit de programme est installé en fonction de l'identifiant de produit de programme qui est acquis auprès du serveur de gestion de licence en fonction de l'identifiant de licence désigné dans une entrée de demande de désinstallation du programme en réponse à l'entrée de la demande, et les deuxièmes informations d'appareil acquises auprès de l'appareil électronique par la deuxième unité d'acquisition d'informations d'appareil, et
une unité de désactivation (120) conçue pour amener l'appareil électronique à enlever le fichier de licence, et pour amener le serveur de gestion de licence à actualiser le statut de licence correspondant à l'identifiant de licence pour indiquer que la licence n'est pas utilisée.

11. Support d'enregistrement lisible par ordinateur, pourvu d'un programme informatique représentant une séquence d'instructions destinées à être qui, lorsqu'exécutées par un ordinateur compris dans un serveur prenant en charge l'introduction de programme (10) connecté à un serveur de gestion de licence (50) conçu pour stocker, par mise en corrélation de l'identifiant de licence d'une licence d'un programme destiné à un appareil électronique (20), un identifiant de produit de programme du programme et un statut de licence indicatif de l'état d'utilisation de la licence de programme correspondant à l'identifiant de licence, et
à un serveur de gestion de programme (60) conçu pour stocker l'identifiant de produit de programme du programme et le programme par mise en corrélation de l'identifiant de produit de programme et du programme, lesdites instructions amenant l'ordinateur à exercer les fonctions de :
unité d'acquisition d'informations de produit (112) conçue pour acquérir l'identifiant de produit de programme associé à l'identifiant de licence en réponse à une entrée de l'identifiant de licence,
unité d'acquisition de programme (112) conçue pour acquérir le programme correspondant à l'identifiant de produit de programme acquis par l'unité d'acquisition d'informations de produit auprès du serveur de gestion de programme (60),
unité d'acquisition de licence (117) conçue pour acquérir un fichier de licence (90) correspondant à l'identifiant de licence, par désignation de l'identifiant de licence, auprès du serveur de gestion de licence et par actualisation de l'état de licence de l'identifiant de licence à une valeur indiquant que la licence est utilisée, et
unité de commande d'installation (118) conçue pour envoyer le programme acquis et le fichier de licence acquis à l'appareil électronique connecté au serveur prenant en charge l'introduction de programme par le biais du réseau ;
**caractérisé en ce que** le serveur prenant en charge l'introduction de programme (10) comprend en outre :
une unité d'acquisition d'informations d'appareil (113) conçue pour acquérir, auprès de l'appareil électronique (20), des informations d'appareil comprenant le numéro d'appareil qui identifie de manière unique l'appareil de formation d'image 20 ; et
l'unité d'acquisition de licence (117) étant en outre conçue pour enregistrer dans le fichier de licence (90) le numéro d'appareil de l'appareil de formation d'image (20) acquis par l'unité d'acquisition d'informations d'appareil (113) ;
l'appareil électronique (20) comprenant une unité de vérification de licence (22) conçue pour activer le programme acquis lorsque le numéro d'appareil du fichier de licence acquis (90) et de l'appareil électronique (20) dans lequel le programme doit être activé sont les mêmes.

12. Support d'enregistrement lisible par ordinateur selon la revendication 11, les instructions amènent en outre l'ordinateur à exercer les fonctions de :
unité de réception de destination d'installation (114) conçue pour recevoir la désignation de l'appareil électronique dans lequel le programme doit être installé ;
l'unité de commande d'installation envoyant le programme et le fichier de licence à l'appareil électronique correspondant à la désignation.

13. Support d'enregistrement lisible par ordinateur selon la revendication 11,
dans lequel, lorsque l'acquisition du programme par l'unité d'acquisition de programme échoue, l'unité d'acquisition de licence (117) n'acquiert pas le fichier de licence.

14. Support d'enregistrement lisible par ordinateur selon la revendication 11, dans lequel les instructions amènent en outre l'ordinateur à exercer les fonctions de :
unité d'acquisition d'informations d'appareil (113) conçue pour recevoir des informations d'appareil comprenant l'identifiant de produit de programme du programme installé dans l'appareil électronique, et
unité de confirmation de pertinence (115) conçue pour envoyer les informations d'appareil et l'identifiant de produit de programme acquis par l'unité d'acquisition d'informations de produit au serveur de gestion de programme pour amener le serveur de gestion de programme à déterminer si un programme de subordination dont dépend le programme correspondant à l'identifiant de produit de programme par rapport à un tableau de gestion de dépendances dans lequel est stockée une relation de dépendance entre le programme et ledit programme de subordination, et dans lequel
lorsque le programme de subordination n'est pas installé dans l'appareil électronique, l'unité d'acquisition de programme acquiert le programme de subordination auprès du serveur de gestion de programme.

15. Support d'enregistrement lisible par ordinateur selon la revendication 11, dans lequel les instructions amènent en outre l'ordinateur à exercer les fonctions de :
deuxième unité d'acquisition d'informations d'appareil conçue pour recevoir des deuxièmes informations d'appareil comprenant l'identifiant de produit de programme du programme installé dans l'appareil électronique, en provenance de l'appareil électronique,
unité de détermination de destination de désinstallation (119) conçue pour déterminer l'appareil électronique dans lequel le programme correspondant à l'identifiant de produit de programme est installé en fonction de l'identifiant de produit de programme qui est acquis auprès du serveur de gestion de licence en fonction de l'identifiant de licence désigné dans une entrée de demande de désinstallation du programme en réponse à l'entrée de la demande, et les deuxièmes informations d'appareil acquises auprès de l'appareil électronique par la deuxième unité d'acquisition d'informations d'appareil, et
unité de désactivation (120) conçue pour amener l'appareil électronique à enlever le fichier de licence, et pour amener le serveur de gestion de licence à actualiser le statut de licence correspondant à l'identifiant de licence pour indiquer que la licence n'est pas utilisée.
